# EUROPÄISCHE PATENTANMELDUNG

(11) **EP 3 382 621 A1**
(43) Veröffentlichungstag der Anmeldung: **03.10.2018**
(21) Anmeldenummer: 18158832.8
(22) Anmeldetag: 27.02.2018
(51) Int. Cl.: G06Q 10/08

(54) **VORRICHTUNG ZU EINER GENERIERUNG ZUMINDEST EINER KENNUNG WENIGSTENS EINES GEGENSTANDS**

(30) Priorität: 29.03.2017 DE 102017205299
(71) Anmelder: Robert Bosch GmbH, 70442 Stuttgart (DE)
(72) Erfinder: Schadow, Joachim, 70563 Stuttgart (DE); Stock, Joern, 70711 Leinfelden-Echterdingen (DE); Esenwein, Florian, 70771 Leinfelden-Echterdingen (DE)

(57) **Zusammenfassung**

Die Erfindung geht aus von einer Vorrichtung zu einer Generierung zumindest einer Kennung wenigstens eines Gegenstands (10), insbesondere einer Werkzeugmaschine, mit zumindest einer Erfassungseinheit (12), welche zumindest einen Nutzungsparameter und/oder zumindest einen Gegenstandsparameter des Gegenstands (10) erfasst.

Es wird vorgeschlagen, dass die Vorrichtung zumindest eine Recheneinheit (14) umfasst, welche in Abhängigkeit von dem zumindest einen erfassten Nutzungsparameter und/oder dem zumindest einen erfassten Gegenstandsparameter ein Zertifikat des Gegenstands (10) erstellt.

## Beschreibung

### Stand der Technik

Es ist bereits eine Vorrichtung zur Generierung zumindest einer Kennung wenigstens eines Gegenstands vorgeschlagen worden, mit zumindest einer Erfassungseinheit, welche zumindest einen Nutzungsparameter und/oder zumindest einen Gegenstandsparameter des Gegenstands erfasst.

### Offenbarung der Erfindung

Die Erfindung geht aus von einer Vorrichtung zu einer Generierung zumindest einer Kennung wenigstens eines Gegenstands, insbesondere einer Werkzeugmaschine, mit zumindest einer Erfassungseinheit, welche zumindest einen Nutzungsparameter und/oder zumindest einen Gegenstandsparameter des Gegenstands erfasst.

Es wird vorgeschlagen, dass die Vorrichtung zumindest eine Recheneinheit aufweist, welche in Abhängigkeit von dem zumindest einen erfassten Nutzungsparameter und/oder dem zumindest einen erfassten Gegenstandsparameter ein Zertifikat des Gegenstands erstellt und/oder insbesondere den der Gegenstand zumindest einer Person zuordnet.

Durch die erfindungsgemäße Ausgestaltung der Vorrichtung kann eine Effizienz einer Verwaltung des Gegenstands verbessert werden. Weiter vorteilhaft kann der zumindest eine Gegenstandsparameter und/oder der zumindest eine Nutzungsparameter mittels des Zertifikats speziell hinterlegt, aufbereitet und/oder zusammengefasst werden. Insbesondere kann auf einfache Art und Weise ein für eine Serviceleistung, wie beispielsweise eine Instandhaltung, spezifischer Datensatz anhand des Zertifikats ausgelesen werden. Hierdurch können insbesondere Serviceleistungen, wie beispielsweise eine Instandhaltung, Reparatur, Vermietung oder dergleichen, verbessert werden. Ferner kann vorteilhaft eine Übertragung von Parametern verschiedenen Parametertyps vereinfacht werden. Weiter vorteilhaft kann ein Benutzerkomfort verbessert werden, indem eine Registrierung vereinfacht und/oder eine Garantie des Gegenstands, insbesondere bei Verlust eines Kaufbelegs ermöglicht werden kann. Insbesondere kann mittels des Zertifikats eine Garantie an einen Zustand, insbesondere einen Abnutzungszustand, insbesondere einer Laufzeit, des Gegenstands angepasst werden. Ferner kann abhängig von einer Abnutzung des Gegenstands einem Benutzer eine Option zu einer Verlängerung einer Garantie für den Gegenstand ermöglicht werden. Besonders vorteilhaft kann eine Überwachung des Gegenstands während dessen Lebenszeit verbessert werden, wobei eine Produktion, ein Vertrieb und/oder eine Lagerung des Gegenstands, eine Instandhaltung, ein Besitzerwechsel und/oder dergleichen berücksichtigt werden. Weiter vorteilhaft kann eine Produktsicherheit verbessert werden, da mittels des Zertifikats eine Echtheit des Gegenstands zertifiziert werden kann, wodurch vorteilhaft eine Unterscheidung von Fälschungen verbessert werden kann. Besonders bevorzugt können durch die Zuordnung bei einer Wartung und/oder Reparatur eine Tätigkeit der Person, sowie weitere der Person zugeordnete Gegenstände berücksichtigt werden, so dass insbesondere eine gleichzeitige Wartung der Gegenstände, insbesondere eines Anwendungsgebiets, vermieden werden kann.

Unter einer "Kennung" soll insbesondere eine für einen Gegenstand charakteristische Verknüpfung verstanden werden, welche insbesondere zu einer Verarbeitung in der Recheneinheit vorgesehen ist. Insbesondere ist die Kennung zu einer Verknüpfung des Gegenstands mit dem Zertifikat und/oder der Person vorgesehen. Die Kennung kann insbesondere eine digitale Kennung sein, wie beispielsweise ein Kennungscode, welcher insbesondere zu einer Registrierung des Gegenstands in einem Gegenstandsbestand vorgesehen ist. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Beispielsweise sind/ist die Recheneinheit und/oder die Erfassungseinheit zu einer hier beschriebenen Funktion vorgesehen. Unter einem "Gegenstand" soll insbesondere ein Objekt verstanden werden, welches zumindest zu einer Ausführung zumindest einer Funktion vorgesehen ist und welches, insbesondere zur Ausführung der Funktion, vorzugsweise von einer Person wenigstens führbar und/oder tragbar ist. Der Gegenstand ist insbesondere ein Werkzeug, vorzugsweise ein Handwerkzeug. Besonders bevorzugt ist der Gegenstand eine insbesondere elektrisch betriebene und vorzugsweise tragbare Werkzeugmaschine, vorzugsweise Handwerkzeugmaschine. Unter einer "tragbaren Werkzeugmaschine" soll hier insbesondere eine Werkzeugmaschine zu einer Bearbeitung von Werkstücken verstanden werden, die von einem Bediener transportmaschinenlos transportiert werden kann. Die tragbare Werkzeugmaschine weist insbesondere eine Masse auf, die kleiner ist als 40 kg, bevorzugt kleiner ist als 10 kg und besonders bevorzugt kleiner ist als 5 kg. Unter einer "Handwerkzeugmaschine" soll insbesondere eine werkstück-bearbeitende Maschine, vorteilhaft jedoch eine Bohrmaschine, ein Bohr- und/oder Schlaghammer, eine Säge, ein Hobel, ein Schrauber, eine Fräse, ein Schleifer, ein Winkelschleifer, ein Gartengerät, wie beispielsweise einen Rasenmäher, und/oder ein Multifunktionswerkzeug verstanden werden. Alternativ kann der Gegenstand auch eine Arbeitskleidung sein, wie beispielsweise eine Sicherheitsweste, oder ein elektronisches Arbeitsgerät, wie beispielsweise ein Smartphone. Besonders bevorzugt ist die Vorrichtung zumindest teilweise ein Teil des Gegenstands. Ferner kann der Gegenstand die Vorrichtung vollständig umfassen. Alternativ kann die Vorrichtung von dem Gegenstand zumindest teilweise, vorzugsweise zumindest zu einem Großteil und besonders bevorzugt vollständig separat ausgebildet sein und vorzugsweise Teil einer externen Einheit sein.

Unter einer "Erfassungseinheit" soll insbesondere eine Einheit verstanden werden, welche zur Erfassung des zumindest einen Nutzungsparameters und/oder des zumindest einen Gegenstandsparameters zumindest einen Sensor aufweist. Die Erfassungseinheit ist vorzugsweise zur Erfassung mehrerer Nutzungsparameter und/oder mehrerer Gegenstandsparameter vorgesehen und kann dazu mehrere Sensoren umfassen. Die Erfassungseinheit ist insbesondere Teil des Gegenstands. Alternativ kann die Erfassungseinheit von dem Gegenstand separat ausgebildet sein und vorzugsweise Teil einer externen Einheit sein. Die Erfassungseinheit und/oder insbesondere ein Sensorpaket der Erfassungseinheit umfasst, insbesondere als Sensor, zumindest einen Photosensor, vorzugsweise einen CCD-Sensor (*charge-coupled device*), zumindest einen Kraftsensor, zumindest einen Drucksensor, zumindest einen Beschleunigungssensor, insbesondere zumindest einen Hall-Sensor, zumindest einen Ortssensor, insbesondere zumindest einen GPS-Sensor (*Globales Positionsbestimmungssystem*), zumindest einen Stromsensor, zumindest einen Spannungssensor, zumindest einen Widerstandssensor, zumindest einen Leistungssensor, zumindest einen Energiesensor, zumindest einen Vibrationssensor, zumindest einen Schwingungssensor, zumindest einen Schalldrucksensor, insbesondere zumindest einen Piezosensor, zumindest einen Abstandssensor, insbesondere zumindest einen Laser- und/oder Infrarotsensor, zumindest einen Feuchtigkeitssensor und/oder dergleichen. Insbesondere ist denkbar, dass zur Erfassung verschiedener Parameter und/oder Kenngrößen verschiedene Erfassungseinheiten und/oder verschiedene Sensoren und/oder Sensorpakete insbesondere einer selben Erfassungseinheit vorgesehen sind. Die externe Einheit kann insbesondere eine mobile, insbesondere elektrische Einheit sein, wie beispielsweise ein Wearable, ein Laptop, ein Tablet, ein Smartphone, eine Smartwatch oder dergleichen, sowie insbesondere ein Sensormodul und/oder ein Kommunikationsmodul. Alternativ kann die externe Einheit Teil einer Firmenzentrale, eines Netzwerks, insbesondere eines Rechnernetzwerks, eines Servers, insbesondere eines Servernetzwerks, vorzugsweise einer Cloud sein. Unter einem "Nutzungsparameter" soll insbesondere ein Kennwert verstanden werden, welcher eine Nutzung des Gegenstands abbildet und/oder welcher zumindest mittelbar, vorzugsweise unmittelbar, mit einer Nutzung des Gegenstands korreliert ist. Der Nutzungsparameter kann insbesondere ein interner Nutzungsparameter, welcher insbesondere von einer gegenstandsinternen Erfassungseinheit bestimmt ist, ausgebildet sein. Alternativ kann der Nutzungsparameter insbesondere ein externer Nutzungsparameter sein, welcher insbesondere von einer gegenstandsexternen Erfassungseinheit bestimmt ist, ausgebildet sein. Vorzugsweise ist der Nutzungsparameter ein Nutzungszeitpunkt, eine Nutzungsdauer, eine Nutzungsanzahl, ein Nutzungsstandort, eine Nutzungsintensität, insbesondere eine Nutzungsbelastung, vorzugsweise ein Nutzungsverschleiß, und/oder ein Nutzungszustand des Gegenstands. Ferner könnte der Nutzungsparameter ein Parameter einer Nutzungsroutine sein, welche bei einer Erstinbetriebnahme durchführbar ist. Eine Nutzungsroutine kann insbesondere eine bestimmte Abfolge von Funktionen, Tastenkombinationen oder dergleichen umfassen. Insbesondere werden bei einer Erstellung des Zertifikats und/oder einer Zuordnung des Gegenstands zu einer Person zumindest zwei, vorzugsweise mehrere dieser Nutzungsparameter, insbesondere verschiedener Parametertypen, verwendet. Der Nutzungsparameter kann insbesondere aus zumindest einem Gerätekennwert ermittelt werden, wie beispielsweise aus einem Strom, einer Spannung, einer Drehzahl, einer Beschleunigung, insbesondere einer Vibration, einer Leistung, einer Orientierung, einer Einschaltanzahl, einer Ausschaltanzahl, einer gegenstandsinternen Laufzeit, einer Abnutzung von Bauteilen, einer Schaltzeit, einem Drehzahlverhalten, einer Temperatur und/oder dergleichen, sowie insbesondere einem Auslösen zumindest einer Sicherheitsfunktion, wie beispielsweise eines Kickbacks. Beispielsweise kann anhand der jeweiligen Einschaltanzahl, Ausschaltanzahl und/oder der gegenstandsinternen Laufzeit die Nutzungsdauer generiert werden. Ferner ist es denkbar, dass der Nutzungsparameter ein Nutzungsverschleiß sein kann. Dieser könnte beispielsweise anhand der Nutzungsdauer und einer Abnutzung bestimmt werden. Der Nutzungszeitpunkt kann insbesondere ein Erstbetriebszeitpunkt sein. Die Nutzungsdauer kann insbesondere eine Dauer, insbesondere eine Gesamtnutzungsdauer von Komponenten und/oder Bauteilen und/oder der gesamten Handwerkzeugmaschine und/oder der Arbeitskleidung sein, wie beispielsweise zumindest eines Motors, insbesondere zumindest einer Betriebsrichtung des Motors, zumindest einer Elektronik, zumindest eines Werkzeugs, wie beispielsweise zumindest eines Schraubers, zumindest eines Bohrers, zumindest eines Meißels oder dergleichen, zumindest eines Energiespeichers, wie beispielsweise zumindest eines Akkumulators und/oder zumindest einer Batterie, und zwar kann die Nutzungsdauer vorzugsweise zumindest eine Aufladedauer und/oder zumindest eine Entladedauer, zumindest eine Überlastbetriebsdauer oder dergleichen sein. Ferner kann die Nutzungsanzahl insbesondere eine Anzahl von Ein- und/oder Ausschaltvorgängen, eine Anzahl von Lade- und/oder Entladezyklen eines Energiespeichers, eine Anzahl ausgelöster Wechselrichterschaltungen einer Elektronik und/oder eines Motors, eine Nutzungsanzahl von Werkzeugen, eine Anzahl von ausgelösten Schutzfunktionen, wie beispielsweise eines Kickbacks, eines Neustarts und/oder eines Resets, eine Anzahl von fehlerhaften Nutzungen, wie beispielsweise durch Herunterfallen und/oder unsachgemäße Lagerung, oder eine Anzahl von Fehlermeldungen sein. Die Nutzungsintensität ist insbesondere eine vorzugsweise durchschnittliche, prozentuale und/oder maximale Leistung der Handwerkzeugmaschine und/oder der Arbeitskleidung, zumindest eine Stromintensität, zumindest eine Spannungsintensität, zumindest eine Phasenverschiebung zwischen Strom und Spannung und/oder zumindest eine vorzugsweise durchschnittliche und/oder maximale Drehzahl oder Drehzahländerung und/oder eine Überlast. Ferner kann die Nutzungsintensität zumindest eine Schwingungsintensität, zumindest eine Vibrationsintensität, zumindest eine Schallemissionsintensität, zumindest ein vorzugsweise durchschnittliches, prozentuales und/oder maximales Drehmoment, zumindest ein vorzugsweise durchschnittlicher, prozentualer und/oder maximaler Wirkungsgrad, zumindest eine Anpresskraft, insbesondere zumindest eine Anpresskraftintensität, und/oder eine Schlagenergie sein. Die Nutzungstemperatur ist insbesondere eine durchschnittliche, prozentuale und vorzugsweise eine maximale Temperatur, vorzugsweise ein Temperaturgradient, und zwar insbesondere vor, nach und/oder während eines Betriebs der Handwerkzeugmaschine und/oder der Arbeitskleidung, und zwar insbesondere des Motors, des Energiespeichers, des Werkzeugs, wie beispielsweise eines Bohrers, Schraubers und/oder Meißels, oder eines Zubehörs und/oder einer Umgebung der Handwerkzeugmaschine und/oder der Arbeitskleidung. Der Nutzungszustand ist insbesondere ein Zustand der Handwerkzeugmaschine und/oder der Arbeitskleidung, wie beispielsweise ein Fehlerzustand, ein Ruhezustand, ein Arbeitszustand, ein Ladezustand des Energiespeichers und/oder ein Zustand eines Deratings zumindest einer elektrischen Komponente der Handwerkzeugmaschine und/oder der Arbeitskleidung, wie beispielsweise einer Elektronik, des Energiespeichers und/oder eines Motors. Der Nutzungsverschleiß ist insbesondere eine zeitliche Veränderung zumindest eines Bauteils der Handwerkzeugmaschine und/oder der Arbeitskleidung, und zwar insbesondere eines Werkzeugs und/oder einer elektrischen Komponente, wie beispielsweise eines Innenwiderstands des Energiespeichers, einer Lade- und/oder Entladekurve des Energiespeichers und/oder einer Derating-Kurve.

Unter einem "Gegenstandsparameter" soll insbesondere ein Standort, ein Fertigstellungszeitpunkt, ein Produktionsparameter, ein Instandhaltungsparameter, wie insbesondere ein Instandhaltungszeitpunkt und/oder eine Angabe einer instand zu haltenden Komponente des Gegenstands, und/oder ein Vertriebsparameter verstanden werden. Der Gegenstandsparameter kann insbesondere ein interner Gegenstandsparameter, welcher insbesondere von einer gegenstandsinternen Erfassungseinheit bestimmt ist, ausgebildet sein. Alternativ kann der Gegenstandsparameter insbesondere als ein externer Gegenstandsparameter, welcher insbesondere von einer gegenstandsexternen Erfassungseinheit bestimmt ist, ausgebildet sein. Unter einem "Vertriebsparameter" soll insbesondere ein Kennwert verstanden werden, welcher einen Vertrieb, wie insbesondere einen Verkauf und/oder eine Vermietung, des Gegenstands kennzeichnet und/oder mit diesem korreliert ist, wie insbesondere ein Kaufzeitpunkt, vorzugsweise ein Kaufdatum, ein Kaufbeleg, eine Verkäuferinformation, wie vorzugsweise ein Verkaufsort, eine Besitzerinformation, eine Vorbesitzerinformation, ein Vermietungszeitpunkt, vorzugsweise ein Vermietungsdatum, ein Vermietungsbeleg, eine Vermietungsinformation, wie vorzugsweise ein Vermietungsort oder eine Mieterinformation, oder dergleichen. Unter einem "Produktionsparameter" soll insbesondere ein Kennwert verstanden werden, welcher eine Produktion des Gegenstands kennzeichnet und/oder mit diesem korreliert ist, wie insbesondere eine Seriennummer, ein Produktionszeitpunkt, vorzugsweise ein Produktionsdatum, eine Produktionsinformation, wie vorzugsweise ein Produktionsort, oder dergleichen. Die Vorrichtung weist insbesondere zum abrufbar Hinterlegen der Parameter und/oder des Zertifikats zumindest eine Speichereinheit auf. Die Speichereinheit kann insbesondere zumindest zwei, vorzugsweise mehrere voneinander verschiedene Speicherpartitionen aufweisen, welche zu einer Hinterlegung verschiedener Parameter, insbesondere verschiedener einem jeweiligen Zertifikat zugeordneter Parameter, und/oder Zertifikate vorgesehen sind. Insbesondere ist die Speichereinheit als ein Teil des Gegenstands ausgebildet, und zwar vorzugsweise als ein Speicherchip, wie beispielsweise eine SIM-Karte und/oder als eine GSM-Karte und/oder als Teil einer Gegenstandselektronik, einer externen Elektronik oder dergleichen. Alternativ kann die Speichereinheit von dem Gegenstand zumindest teilweise, vorzugsweise zumindest zu einem Großteil und besonders bevorzugt vollständig separat ausgebildet sein und vorzugsweise Teil einer externen Einheit sein. Unter einer "Recheneinheit" soll insbesondere eine Einheit mit einem vorzugsweise kabellosen Informationseingang, einer Informationsverarbeitung und einer Informationsausgabe verstanden werden. Vorteilhaft weist die Recheneinheit zumindest einen Prozessor, einen Speicher, Ein- und Ausgabemittel, weitere elektrische Bauteile, ein Betriebsprogramm, Regelroutinen, Steuerroutinen und/oder Berechnungsroutinen auf. Insbesondere ist auf der Recheneinheit ein Verfahren zur Generierung der Kennung des Gegenstands hinterlegt. Vorzugsweise sind die Bauteile der Recheneinheit auf einer gemeinsamen Platine angeordnet und/oder vorteilhaft in einem gemeinsamen Gehäuse angeordnet. Die Recheneinheit ist insbesondere Teil des Gegenstands. Alternativ kann die Recheneinheit von dem Gegenstand separat ausgebildet sein und vorzugsweise Teil einer externen Einheit sein. Unter einem "Zertifikat" soll insbesondere eine Kennung verstanden werden, welche den Gegenstand kennzeichnet und welche insbesondere Eigenschaften des Gegenstands und/oder dem Gegenstand zugehörige Informationen umfasst. Vorzugsweise fasst das Zertifikat zumindest einen Nutzungsparameter und/oder Gegenstandsparameter, vorzugsweise zumindest zwei Nutzungsparameter und/oder Gegenstandsparameter und besonders bevorzugt zumindest zwei verschiedene Parametertypen, wie insbesondere zumindest einen Nutzungsparameter und zumindest einen Gegenstandsparameter, zusammen. Ferner ist es denkbar, dass zumindest ein Zertifikat und zumindest ein weiteres Zertifikat zu zumindest einem Hauptzertifikat zusammengefasst werden können. Alternativ oder zusätzlich ist dem Zertifikat zumindest ein Autorisierungsparameter und/oder Verschlüsselungsparameter zugeordnet. Der Autorisierungsparameter umfasst insbesondere eine Berechtigung für ein Speichern, Ändern und/oder Abfragen des Zertifikats. Der Verschlüsselungsparameter umfasst insbesondere zumindest einen Schlüssel zu einer Verschlüsselung und/oder Entschlüsselung des Zertifikats. Eine Ausgestaltung des Zertifikats ist insbesondere abhängig von einer Kombination des zumindest einen Gegenstandsparameters und/oder des zumindest einen Nutzungsparameters, mittels deren/dessen das Zertifikat erstellt wird. Vorzugsweise ist das Zertifikat ein Betriebszertifikat, ein Echtheitszertifikat und/oder vorzugsweise ein Ersatzzertifikat, welches dazu vorgesehen ist, ein Garantiezertifikat, wie beispielsweise einen Kaufbeleg, einen Garantieschein oder dergleichen für den Gegenstand zumindest zeitweise oder vollständig zu ergänzen und/oder zu ersetzen. Ferner ist es denkbar, dass das Zertifikat als ein Produktionszertifikat ausgebildet ist, welches insbesondere zumindest Parameter einer Produktion zusammenfasst, als zumindest ein Testzertifikat, welches zumindest Parameter einer Nutzungsintensität zusammenfasst, als zumindest ein Registrierzertifikat, welches Parameter einer Identität des Gegenstands und/oder einer dem Gegenstand zugeordneten Person zusammenfasst, als zumindest ein Erstbetriebszertifikat, welches insbesondere Parameter eines Erstbetriebs zusammenfasst, als zumindest ein Instandhaltungszertifikat, welches insbesondere Parameter einer Instandhaltung des Gegenstands zusammenfasst, als zumindest ein Sicherheitszertifikat, welches Parameter einer Betriebssicherheit des Gegenstands zusammenfasst, als zumindest ein Lebenszeitzertifikat, welches insbesondere Parameter einer Nutzungsdauer zusammenfasst, und/oder als zumindest ein Entsorgungszertifikat. Denkbar ist, dass bei einer Verwendung des Ersatzzertifikats vollständig auf einen handelsüblichen Kaufbeleg oder Garantieschein verzichtet werden kann. Alternativ oder zusätzlich könnte das Zertifikat zu einem, insbesondere bargeldlosen, Erwerb des Gegenstands, von Zubehör und/oder zu einer Buchung von Serviceleistungen, wie beispielsweise einer Instandhaltung, Wartung und/oder Reparatur, oder dergleichen, insbesondere im elektronischen Handel, wie insbesondere über ein Online-Portal, Internethandel, E-Commerce oder dergleichen, vorgesehen sein und dort vorteilhaft als digitaler Kaufbeleg dienen. Beispielsweise kann das Zertifikat als eine Kartennummer einer insbesondere in den Gegenstand eingebauten SIM-Karte (Subscriber Identity Module) und/oder GSM-Karte (Global System for Mobile Communications), als eine MAC-Adresse und/oder als eine in einer Speichereinheit des Gegenstands hinterlegten IMEI-Nummer (International Mobile Station Equipment Identity) ausgebildet sein.

Es wird ferner vorgeschlagen, dass die Recheneinheit zumindest anhand des zumindest einen Nutzungsparameters und/oder des zumindest einen Gegenstandsparameters wenigstens einen Erstbetriebszeitpunkt des Gegenstands ermittelt und abhängig von diesem das Zertifikat erstellt. Unter einem "Erstbetriebszeitpunkt" soll insbesondere ein Zeitpunkt eines Erstbetriebs eines Gegenstands durch einen Endkunden verstanden werden. Der Erstbetrieb ist insbesondere verschieden von einem Testbetrieb, welcher beispielsweise bei einer Produktion und/oder bei einem Vertrieb durchgeführt werden kann. Der Erstbetrieb kann beispielsweise erkannt werden, wenn der Nutzungsparameter einen Nutzungsgrenzwert überschreitet, ab welchem ein Erstbetrieb angenommen wird. Der Grenzwert wird dabei derart angesetzt, dass in einem Testbetrieb der Nutzungsparameter den Grenzwert nicht überschreitet. Ist der Nutzungsparameter beispielsweise eine Nutzungsdauer, stellt die Recheneinheit bei einer Überschreitung eines Nutzungsgrenzwerts, insbesondere einer Nutzungsgrenzdauer, einen Erstbetrieb fest. Vorzugsweise bestimmt die Recheneinheit mit einem weiteren Nutzungsparameter, wie beispielsweise einem Nutzungszeitpunkt, den Erstbetriebszeitpunkt. Besonders vorteilhaft erstellt die Recheneinheit zumindest anhand des Erstbetriebszeitpunkts ein Erstbetriebszertifikat des Gegenstands. Es kann vorteilhaft eine Erkennung eines Erstbetriebs verbessert werden. Insbesondere kann vermieden werden, dass ein Testbetrieb, wie beispielsweise bei einer Produktion und/oder einem Verkauf des Gegenstands, mit einem Erstbetrieb verwechselt werden kann. Weiter vorteilhaft kann ein von einem Kaufzeitpunkt abweichender Erstbetriebszeitpunkt bei der Erstellung des Ersatzzertifikats berücksichtigt werden, wodurch insbesondere eine Garantie verlängert werden kann. Vorteilhaft kann der Erstbetriebszeitpunkt bei der Erstellung des Ersatzzertifikats einen Kaufzeitpunkt ersetzen. Besonders bevorzugt kann eine Nutzungsangepasste Garantie bereitgestellt werden, welche sich insbesondere über eine gesetzliche Gewährleistung hinaus erstreckt.

Des Weiteren wird vorgeschlagen, dass die Recheneinheit anhand zumindest eines in einer insbesondere internen Speichereinheit hinterlegten Vertriebsparameters und/oder Produktionsparameters den ermittelten Erstbetriebszeitpunkt verifiziert. Die Speichereinheit kann insbesondere eine Speichereinheit der Vorrichtung sein. Vorzugsweise ist die Speichereinheit eine insbesondere interne Speichereinheit des Gegenstands. Die Speichereinheit kann alternativ verschieden und/oder separat von dem Gegenstand ausgebildet sein. Insbesondere kann die Speichereinheit Teil einer externen Einheit sein. Denkbar ist, dass die Speichereinheit Teil der Recheneinheit ist. Denkbar ist, dass die Erfassungseinheit den Vertriebsparameter und/oder den Produktionsparameter erfasst und diese/diesen insbesondere in der Speichereinheit hinterlegt. Vorzugsweise bei einer Produktion und/oder bei einem Vertrieb, insbesondere bei einem Verkauf und/oder Verleih, des Gegenstands ist der Vertriebsparameter und/oder der Produktionsparameter in der Speichereinheit hinterlegt. Insbesondere ist denkbar, dass der Vertriebsparameter und/oder der Produktionsparameter durch einen Benutzer in der Speichereinheit zu einer Verifizierung des Erstbetriebszeitpunkts hinterlegt werden kann. Es kann vorteilhaft ein Erstbetriebszeitpunkt bei einer Erstellung des Ersatzzertifikats berücksichtigt werden. Weiter vorteilhaft kann eine fehlerhafte Bestimmung eines Erstbetriebszeitpunkts vermieden werden. Besonders vorteilhaft kann ein Missbrauch durch Manipulation von Vertriebsparametern und/oder Produktionsparametern vermieden werden.

Weiterhin wird vorgeschlagen, dass die Recheneinheit anhand des zumindest einen Vertriebsparameters und/oder des zumindest einen Produktionsparameters und des ermittelten Erstbetriebszeitpunkts ein Alter des Gegenstands berechnet und abhängig von diesem das Zertifikat erstellt. Insbesondere kann die Recheneinheit anhand des Nutzungsparameters einen Nutzungszeitraum bestimmen, welcher sich aus der Differenz des Alters des Gegenstands und des Zeitraums zwischen dem Kaufzeitpunkt und einem jeweiligen Nutzungszeitpunkt, insbesondere einem Erstbetriebszeitpunkt, berechnet und bei einer Erstellung des Zertifikats berücksichtigen. Besonders bevorzugt ersetzt der Erstbetriebszeitpunkt einen Kaufzeitpunkt, insbesondere im Rahmen einer Garantie, für den Fall, dass der Kaufzeitpunkt wesentlich von dem Erstbetriebszeitpunkt abweicht. Darunter, dass der Erstbetriebszeitpunkt "wesentlich vom Kaufzeitpunkt abweicht", soll insbesondere verstanden werden, dass der Kaufzeitpunkt und der Erstbetriebszeitpunkt um zumindest fünf Stunden, vorzugsweise zumindest fünfzehn Stunden und besonders bevorzugt um zumindest dreißig Stunden auseinander liegen. Insbesondere gewichtet die Recheneinheit bei einer Bestimmung eines zeitlichen Abstands zwischen Erstbetriebszeitpunkt und Kaufzeitpunkt diesen mit einem gegenstandsspezifischen Korrekturfaktor, welcher abhängig von einer durchschnittlichen Benutzungsdauer des Gegenstands insbesondere pro Tag ist. Insbesondere umfasst der Korrelationsfaktor einen Wert von einer Stunde pro Tag und besonders bevorzugt von einer halben Stunde pro Tag. Es kann vorteilhaft ein Zertifikat erstellt werden, welches Zeitdauern, wie beispielsweise von Transport und/oder Lagerung, von einer Garantiezeit ausschließen kann, wodurch eine Gesamtgarantiezeit verlängert werden kann.

Es wird ferner vorgeschlagen, dass die Recheneinheit zumindest anhand des zumindest einen Nutzungsparameters und/oder des zumindest einen Gegenstandsparameters zumindest eine Anwendung des Gegenstands ermittelt und abhängig von diesem das Zertifikat erstellt. Insbesondere kann die Recheneinheit im Laufe einer Lebenszeit des Gegenstands das Zertifikat, insbesondere ein Lebenszeitzertifikat, bei einer sich ändernden Anwendung anpassen. Insbesondere kann die Recheneinheit eine Hauptanwendung des Gegenstands ermitteln. Unter einer "Hauptanwendung" soll insbesondere in diesem Zusammenhang eine Anwendung verstanden werden, deren Anwendungszeitraum zumindest 50 %, vorzugsweise zumindest 70 % und besonders bevorzugt zumindest 90 % eines Gesamtanwendungszeitraums des Gegenstands umfasst. Es kann das Ersatzzertifikat spezifisch auf die Anforderungen der Anwendung bei Erstellung abgestimmt und/oder während einer Laufzeit angepasst werden. Insbesondere können auf bestimmte Anwendungen, insbesondere Hauptanwendungen, auf das jeweilige Zertifikat abgestimmte Zusatzleistungen angeboten werden. Ferner können Anwendungen, für welche der Gegenstand nicht vorgesehen ist, aus einem Garantieumfang des Ersatzzertifikats ausgeschlossen werden.

Weiterhin wird vorgeschlagen, dass die Erfassungseinheit innerhalb zumindest eines Zeitintervalls, insbesondere während einer Garantiezeit des Zertifikats und besonders bevorzugt während einer Lebenszeit des Gegenstands, insbesondere kontinuierlich, Nutzungsparameter und/oder Gegenstandsparameter erfasst, wobei die Recheneinheit diese zu einer Anpassung des erstellten Zertifikats nutzt. Es kann vorteilhaft eine kontinuierliche Anpassung des Zertifikats während einer Lebenszeit des Gegenstands erzielt werden. Weiter vorteilhaft kann eine kontinuierliche Überwachung des Gegenstands erfolgen.

Ferner wird vorgeschlagen, dass die Erfassungseinheit zur Erstellung des Zertifikats und/oder zur Zuordnung zumindest einen zumindest als ein Nutzungszeitpunkt, eine Nutzungsdauer, eine Nutzungsanzahl, ein Nutzungsstandort, eine Nutzungsintensität, und/oder ein Nutzungszustand des Gegenstands ausgebildeten Nutzungsparameter erfasst. Es kann vorteilhaft eine einfache und insbesondere zertifikatspezifische Nutzungsparametererfassung erzielt werden.

Es wird des Weiteren vorgeschlagen, dass die Recheneinheit den Gegenstand in Abhängigkeit von zumindest einem Identifikationsparameter der Person der Person zuordnet, und bei einer wiederholten Zuordnung mittels des gleichen Identifikationsparameters eine Zuteilung von Nutzungsrechten für die Person zumindest initiiert. Unter einem "Identifikationsparameter" soll insbesondere ein Kennwert verstanden werden, welcher eine Person und/oder ein mit der Person bereits verknüpftes Nutzerkonto, einen weiteren Gegenstand, wie beispielsweise ein Wearable, einen Laptop, ein Smartphone, ein Tablet, eine Smartwatch oder dergleichen, sowie insbesondere eine Arbeitskleidung kennzeichnet. Insbesondere kann der Identifikationsparameter eine dem Nutzer zugordnete Identifikationsnummer, ein PIN, ein Fingerabdruck, ein Irisabbild oder dergleichen sein. Insbesondere ist denkbar, dass die Recheneinheit bei einer wiederholten Zuordnung mit demselben Identifikationsparameter die Person als einen Hauptnutzer und/oder als einen Ansprechpartner für eine Verwaltung, Instandhaltung, Wartung und/oder Reparatur des Gegenstands kennzeichnet und dieser vorzugsweise Hauptnutzungsrechte zuweist. Unter einem "Hauptnutzer" soll insbesondere eine Person verstanden werden, welche den Gegenstand zu zumindest 50 %, vorzugsweise zu zumindest 70 % und besonders bevorzugt zu zumindest 90 % einer Gesamtverwendungszeit des Gegenstands nutzt. Es kann vorteilhaft eine Zuordnung zu einer Person verbessert und insbesondere besonders sicher gestaltet werden. Weiter vorteilhaft kann eine Sicherheit verbessert werden, da insbesondere nur identifizierte Personen berechtigt sind den Gegenstand zu nutzen. Ferner ist es denkbar, dass ein Zertifikat zu einer Zuordnung einer Person den Identifikationsparameter umfasst.

Zudem wird vorgeschlagen, dass die Vorrichtung zumindest eine, insbesondere kabellose, Kommunikationseinheit aufweist, welche den zumindest einen Nutzungsparameter und/oder den zumindest einen Gegenstandsparameter zu einer Erstellung des zumindest einen Zertifikats und/oder insbesondere zu einer Zuordnung des Gegenstands zu einer Person an zumindest eine externe Einheit, welche insbesondere die Recheneinheit umfassen kann, überträgt. Unter einer "Kommunikationseinheit" soll insbesondere eine Einheit verstanden werden, welche zumindest zu einer elektronischen, vorzugsweise kabellosen Informationsübertragung vorgesehen ist. Die Kommunikationseinheit ist insbesondere zu einer autorisierten und/oder verschlüsselten Informationsübertragung vorgesehen, welche insbesondere abhängig von dem zumindest einen Autorisierungsparameter und/oder dem zumindest einen Verschlüsselungsparameter des Zertifikats ist. Insbesondere ist die Kommunikationseinheit zu einer Informationsübertragung per Funk, wie beispielsweise über W-LAN, Bluetooth, Nahfeldkommunikation, Transponder, wie beispielsweise mittels eines RFID-Chips, drahtlose Netzwerke mit geringem Datenaufkommen, wie insbesondere ZigBee, mittels Datentransferprotokollen, wie insbesondere ANT+, LoRa, NBloT, oder dergleichen, und/oder zu einer optischen Informationsübertragung, wie beispielsweise Infrarot, vorgesehen. Die Kommunikationseinheit kann insbesondere Teil des Gegenstands und/oder der externen Einheit sein. Denkbar ist, dass die Kommunikationseinheit Teil einer mobilen Einheit ist, wie beispielsweise eines Wearable, eines Laptops, eines Smartphones, eines Tablets, einer Smartwatch oder dergleichen, und/oder von Arbeitskleidung sein kann. Vorzugsweise weist die Vorrichtung zumindest eine Sende- und/oder Empfangseinheit zu einer Übertragung von elektronischen Daten auf. Die Vorrichtung weist bevorzugt zumindest zwei Sende- und/oder Empfangseinheiten oder Informationseinheiten auf, insbesondere zumindest eine NFC-Sende- und/oder Empfangseinheit und eine Bluetooth- Sende- und/oder Empfangseinheit. Alternativ oder zusätzlich umfasst die Vorrichtung zumindest eine oder mehrere Informationseinheit/en, wie beispielsweise einen QR-Code, einen Datamatrixcode o. dgl. Vorzugsweise ist zumindest eine der zumindest zwei Sende- und/oder Empfangseinheiten, insbesondere eine NFC-Sende- und/oder Empfangseinheit, zu einem schnellen Verbindungsaufbau zwischen der Vorrichtung und einer externen Einheit, insbesondere der Handwerkzeugmaschine, vorgesehen. Bevorzugt ist zumindest eine der zumindest zwei Sende- und/oder Empfangseinheiten, insbesondere eine Bluetooth -Sende- und/oder Empfangseinheit, zu einer Datenübertragung, insbesondere zu einer Übertragung einer Vielzahl an Daten in einer kurzen Zeitspanne, zwischen der Vorrichtung und einer externen Einheit, insbesondere der Handwerkzeugmaschine, vorgesehen. Es kann vorteilhaft eine flexible Übertragung von Nutzungsparametern und/oder Gegenstandsparametern zur Erstellung des Zertifikats erreicht werden.

Es wird ferner vorgeschlagen, dass die Vorrichtung eine, insbesondere kabellose, Kommunikationseinheit aufweist, welche ein erstelltes Zertifikat und/oder insbesondere die Zuordnung des Gegenstands zu der Person an zumindest eine externe Einheit überträgt. Es kann vorteilhaft eine Erstellung des Zertifikats innerhalb des Gegenstands erfolgen. Vorzugsweise kann ein Rechenaufwand der externen Einheit verringert werden. Zudem kann eine Bereitstellung des Zertifikats vereinfacht werden.

Die erfindungsgemäße Vorrichtung soll hierbei nicht auf die oben beschriebene Anwendung und Ausführungsform beschränkt sein. Insbesondere kann die erfindungsgemäße Vorrichtung zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Vorrichtung zur Generierung einer Kennung in einer schematischen Ansicht,
- Fig. 2: einen schematischen Ablauf einer von einer Recheneinheit der Vorrichtung durchgeführten Generierung einer Kennung,
- Fig. 3: einen weiteren schematischen Ablauf einer von der Recheneinheit durchgeführten Generierung einer Kennung und
- Fig. 4: eine schematische Ansicht von im Verlauf einer Lebenszeit erstellten Zertifikaten.

### Beschreibung des Ausführungsbeispiels

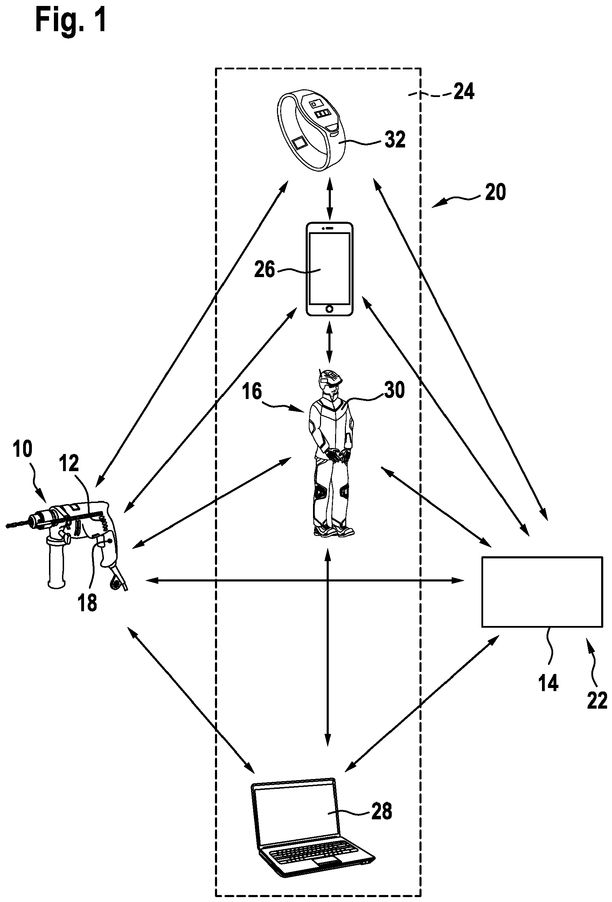

In Figur 1 ist eine schematische Darstellung einer Vorrichtung zur Generierung zumindest einer Kennung wenigstens eines Gegenstands 10 dargestellt. Die Vorrichtung ist zumindest teilweise Teil des Gegenstands 10. Der Gegenstand 10 ist im vorliegenden Fall als eine Handwerkzeugmaschine ausgebildet, und zwar insbesondere als ein Schlagbohrer. Alternativ oder zusätzlich kann der Gegenstand 10 auch als ein beliebiger, einem Fachmann vorteilhaft erscheinender Gegenstand 10 ausgebildet sein, wie beispielsweise als ein Schwingschleifer, eine Gartenwerkzeugmaschine oder dergleichen. Ferner kann das System eine von der hier dargestellten Anzahl abweichende Anzahl an Gegenständen 10 aufweisen, welche insbesondere voneinander verschieden ausgebildet sein können. Insbesondere kann eine Anzahl von Gegenständen 10 einen Gegenstandsbestand ausbilden, zu dessen Verwaltung die Vorrichtung vorgesehen ist. Die Vorrichtung ist dann auch zu einer Generierung von Kennungen der jeweiligen Anzahl an Gegenständen 10 vorgesehen.

Die Vorrichtung umfasst eine Speichereinheit 18. Im vorliegenden Fall ist die Speichereinheit 18 Teil des Gegenstands 10. Die Speichereinheit 18 ist eine interne Speichereinheit 18 des Gegenstands 10. Alternativ kann die Speichereinheit 18 auch Teil einer externen Einheit 22 sein.
In der Speichereinheit 18 ist zumindest ein Vertriebsparameter hinterlegt. Der Vertriebsparameter ist im vorliegenden Fall ein Kaufzeitpunkt, insbesondere ein Kaufdatum. Ferner könnten in der Speichereinheit 18 weitere Vertriebsparameter hinterlegt sein, wie beispielsweise ein Verkaufsort, eine Verkaufsidentifikationsnummer oder dergleichen. Ferner ist in der Speichereinheit 18 zumindest ein Produktionsparameter des Gegenstands 10 hinterlegt. Der Produktionsparameter ist eine Seriennummer. Ferner ist in der Speichereinheit 18 zumindest ein weiterer Produktionsparameter hinterlegt. Der weitere Produktionsparameter ist ein Produktionsdatum. Ferner kann in der Speichereinheit 18 ein erstelltes Zertifikat hinterlegt werden. Das Zertifikat ist mittels eines dem Zertifikat zugeordneten Autorisierungsparameters hinterlegt. Der Autorisierungsparameter vergibt zumindest ein Zugriffs- und/oder Bearbeitungsrecht für das Zertifikat und/oder für zumindest einen Parameter von Parametern, welche in dem Zertifikat zusammengefasst sind.

Die Vorrichtung umfasst zumindest eine Erfassungseinheit 12. Im vorliegenden Fall ist die Erfassungseinheit 12 Teil des Gegenstands 10. Die Erfassungseinheit 12 ist eine interne Erfassungseinheit 12 des Gegenstands 10. Alternativ kann die Erfassungseinheit 12 auch Teil einer externen Einheit 22 sein. Die Erfassungseinheit 12 ist dazu vorgesehen, zumindest einen Nutzungsparameter des Gegenstands 10 zu erfassen. Ferner ist die Erfassungseinheit 12 dazu vorgesehen, einen weiteren Nutzungsparameter zu erfassen. Der Nutzungsparameter ist in der Speichereinheit 18 hinterlegt. Im vorliegenden Fall ist der Nutzungsparameter ein Nutzungszeitpunkt. Der weitere Nutzungsparameter ist in der Speichereinheit 18 hinterlegt. Der weitere Nutzungsparameter ist eine Nutzungsdauer. Alternativ oder zusätzlich können/kann als ein Nutzungsparameter auch ein Nutzungsstandort, eine Nutzungsintensität, und/oder ein Nutzungszustand des Gegenstands 10 erfasst werden und/oder in der Speichereinheit 18 hinterlegt sein. Ferner ist in der Speichereinheit 18 ein Nutzungsgrenzwert hinterlegt. Der Nutzungsgrenzwert ist zum Vergleich mit dem Nutzungsparameter vorgesehen.

Die Vorrichtung ist Teil einer externen Einheit 22. Die externe Einheit 22 ist im vorliegenden Fall als ein Server ausgebildet. Alternativ oder zusätzlich kann es sich bei der externen Einheit 22 um ein Computernetzwerk, eine Firmenzentrale und/oder eine Cloud handeln.

Das System umfasst zumindest eine Recheneinheit 14. Im vorliegenden Fall ist die Recheneinheit 14 Teil des Gegenstands 10. Alternativ kann die Recheneinheit 14 auch Teil der externen Einheit 22 sein. Die Recheneinheit 14 ist dazu vorgesehen, ein Zertifikat des Gegenstands 10 zu erstellen. Die Recheneinheit 14 erstellt das Zertifikat abhängig von dem zumindest dem Nutzungsparameter und insbesondere dem weiteren Nutzungsparameter. Die Recheneinheit 14 ist insbesondere dazu vorgesehen, anhand des Nutzungsparameters und insbesondere des weiteren Nutzungsparameters einen Erstbetriebszeitpunkt zu bestimmen. Der Erstbetriebszeitpunkt ist ein Nutzungszeitpunkt, an welchem eine Nutzungsdauer einen vorgegebenen Nutzungsgrenzwert überschreitet. Alternativ oder zusätzlich ist die Recheneinheit 14 dazu vorgesehen, den Gegenstand 10 zumindest einer Person 16 zuzuordnen.

Ferner umfasst die Vorrichtung zumindest eine Kommunikationseinheit 20. Die Kommunikationseinheit 20 ist als eine kabellose Kommunikationseinheit 20 ausgebildet. Die Kommunikationseinheit 20 verbindet die Erfassungseinheit 12 und/oder die Speichereinheit 18 mit der externen Einheit 22. Die Kommunikationseinheit 20 ist zu einer Übertragung zumindest des Nutzungsparameters, insbesondere zwischen der Gegenstand 10 und der externen Einheit 22 vorgesehen. Ferner ist die Kommunikationseinheit 20 zu einer Übertragung der Vertriebsparameter und/oder der Produktionsparameter vorgesehen. Die Kommunikationseinheit 20 ist zu einer verschlüsselten Übertragung vorgesehen. Die Kommunikationseinheit 20 verschlüsselt das Zertifikat und/oder die zu einer Erstellung des Zertifikats und/oder in dem Zertifikat zusammengefassten Parameter mit zumindest einem dem Zertifikat zugeordneten Verschlüsselungsparameter. Alternativ oder zusätzlich kann die Kommunikationseinheit 20 zu einer Übertragung des erstellten Zertifikats vorgesehen sein. Im vorliegenden Fall ist die Kommunikationseinheit 20 zumindest Teil einer mobilen Einheit 24. Die mobile Einheit 24 ist einer Person 16 zugeordnet, welche den Gegenstand 10 benutzt. Die mobile Einheit 24 ist vorzugsweise von einem Smartphone 26 ausgebildet. Ferner kann die mobile Einheit 24 von einem Laptop 28, einem Netzwerk, insbesondere einem W-LAN Netzwerk, von einer Arbeitskleidung und/oder einer Smartwatch 32 ausgebildet sein. Alternativ ist es auch denkbar, dass die Kommunikationseinheit 20 Teil des Gegenstands 10 und/oder der externen Einheit 22 ist.

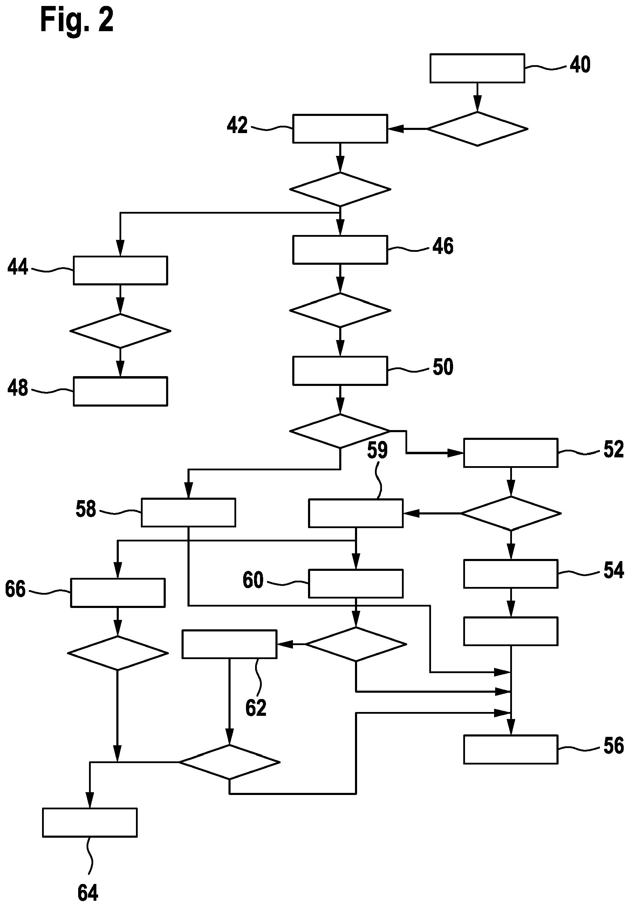

In Figur 2 ist eine von der Recheneinheit 14 der Vorrichtung durchgeführte Generierung einer Kennung schematisch dargestellt. Ferner umfasst die Generierung eine Erstellung zumindest eines Zertifikats. Im vorliegenden Fall ist das Zertifikat ein Erstbetriebszertifikat. Zur Durchführung der Generierung führt die Recheneinheit eine Schrittabfolge aus.

Die Schrittabfolge umfasst zumindest einen Schritt 40. In dem Schritt 40 verbindet die Kommunikationseinheit 20 den Gegenstand 10 mit der externen Einheit 22. Die Recheneinheit 14 registriert den Gegenstand 10 in einem Gegenstandsbestand. Die externe Einheit 22 liest die in der Speichereinheit 18 hinterlegten Parameter, insbesondere den Nutzungsparameter, den Vertriebsparameter, den weiteren Vertriebsparameter, den Produktionsparameter und/oder den weiteren Produktionsparameter, aus. Die Recheneinheit 14 vergleicht, ob zumindest einer der Parameter, insbesondere der Produktionsparameter, und zwar die Seriennummer des Gegenstands 10, bereits hinterlegt ist. Alternativ oder zusätzlich kann die Erfassungseinheit 12 ein manuelles Eingabemittel und/oder eine Bilderfassung der Produktionsparameter umfassen und/oder ermöglichen. Für den Fall, dass der Gegenstand 10, und zwar insbesondere mit dem dazugehörigen Produktionsparameter, im Gegenstandsbestand vorhanden ist, schließt die Recheneinheit 14 den Vorgang ab. Alternativ kann die Erfassungseinheit 12, insbesondere für einen bereits registrierten Gegenstand 10, innerhalb zumindest eines Zeitintervalls Nutzungsparameter insbesondere kontinuierlich erfassen, welche die Recheneinheit 14 zu einer Anpassung eines erstellten Zertifikats verarbeitet.

Die Schrittabfolge umfasst einen weiteren Schritt 42. Die Recheneinheit 14 führt den Schritt 42 aus, wenn die Produktionsparameter, Vertriebsparameter, Nutzungsparameter und/oder der zugehörige Gegenstand 10 noch nicht in der externen Einheit 22 hinterlegt und/oder registriert sind. In dem Schritt 42 fragt die Recheneinheit 14 ab, ob der Gegenstand 10 bereits der Person 16 zugeordnet ist. Alternativ kann auch abgefragt werden, ob der Gegenstand 10 einem Nutzer, einem Besitzer, einem Hauptnutzer und/oder einer Firma zugeordnet ist.

Die Schrittabfolge umfasst einen weiteren Schritt 44. Die Recheneinheit 14 führt den Schritt 44 durch, wenn der Gegenstand 10 der Person 16 noch nicht zugeordnet ist. Die Recheneinheit 14 führt in dem Schritt 44 eine Zuordnung durch. Ferner fragt die Recheneinheit 14 ab, ob der Gegenstand 10 mit seinem Produktionsparameter bereits einer weiteren Person 16, einem weiteren Nutzer, einem weiteren Besitzer, einem weiteren Hauptnutzer und/oder einer weiteren Firma zugeordnet ist.

Die Schrittabfolge umfasst einen weiteren Schritt 48. Die Recheneinheit 14 ordnet den Gegenstand 10 zu, für den Fall, dass der Gegenstand 10 mittels seines Produktionsparameters noch nicht einer weiteren Person 16 zugeordnet ist.

Die Schrittabfolge umfasst einen weiteren Schritt 46. In dem Schritt 46 fragt die Recheneinheit 14 ab, ob ein Zertifikat für den Gegenstand 10 erstellt werden soll.

Die Schrittabfolge umfasst einen weiteren Schritt 50. Die Recheneinheit 14 führt den Schritt 50 durch, wenn ein Zertifikat erstellt werden soll. Die Recheneinheit 14 erstellt, zumindest in Abhängigkeit von dem zumindest einen erfassten Nutzungsparameter, das Zertifikat des Gegenstands 10. Ferner ermittelt die Recheneinheit 14 anhand des zumindest einen Nutzungsparameters zumindest eine Anwendung, insbesondere eine Hauptanwendung, des Gegenstands 10 und erstellt abhängig von diesem das Zertifikat. Ferner ermittelt die Recheneinheit 14 zumindest anhand des zumindest einen Nutzungsparameters, und zwar insbesondere des Nutzungszeitpunkts, und des weiteren Nutzungsparameters, und zwar insbesondere der Nutzungsdauer, einen Erstbetriebszeitpunkt des Gegenstands 10. Überschreitet beispielsweise bei einer Nutzung des Gegenstands 10 der weitere Nutzungsparameter einen Grenzwert, so nimmt die Recheneinheit 14 den Nutzungsparameter zum Zeitpunkt des Überschreitens als den Erstbetriebszeitpunkt an. Die Recheneinheit 14 erstellt ferner abhängig vom Erstbetriebszeitpunkt das Zertifikat oder passt dieses an den Erstbetriebszeitpunkt an. Ferner bestimmt die Recheneinheit 14 ein Alter des Gegenstands 10. Dazu verifiziert die Recheneinheit 14 anhand zumindest des in der Speichereinheit 18 hinterlegten Vertriebsparameters und/oder Produktionsparameters den ermittelten Erstbetriebszeitpunkt. Die Recheneinheit 14 bestimmt das Alter aus der Differenz des Erstbetriebszeitpunkts und des weiteren Produktionsparameters. Beispielsweise kann die Recheneinheit 14 einen Fehler ausgeben, wenn ein Erstbetriebszeitpunkt vor einem Kaufzeitpunkt des Vertriebsparameters liegt.

Die Schrittabfolge umfasst einen weiteren Schritt 52. Die Recheneinheit 14 führt den weiteren Verfahrensschritt 52 durch, wenn der Erstbetriebszeitpunkt um mehr als fünf Stunden vom Kaufzeitpunkt abweicht. Ferner fragt die Recheneinheit 14 in dem Schritt 52 einen weiteren Vertriebsparameter, und zwar insbesondere einen Kaufzeitpunkt, ab. Die Recheneinheit 14 fragt ab, ob ein Kaufbeleg vorhanden ist.

Die Schrittabfolge umfasst einen weiteren Schritt 54. Die Recheneinheit 14 führt den Schritt 54 durch, wenn der Kaufbeleg vorhanden ist. Alternativ ist es denkbar, dass kein Kaufbeleg vorhanden ist oder dieser verloren wurde, so dass für diesen Fall das von der Recheneinheit 14 erstellte Zertifikat den Kaufbeleg ersetzt. In dem Schritt 54 liest die Erfassungseinheit 12 den Kaufbeleg ein. Dazu liest die Erfassungseinheit 12 den weiteren Vertriebsparameter aus dem Kaufbeleg aus.

Die Schrittabfolge umfasst einen weiteren Schritt 56. In dem Schritt 56 übermittelt die Kommunikationseinheit 20 die erfassten Parameter an die externe Einheit 22. Die Recheneinheit 14 schließt eine Registrierung des Gegenstands 10 in dem Gegenstandsbestand ab, indem sie für den Gegenstand 10 ein Ersatzzertifikat erstellt und/oder insbesondere den Gegenstand 10 der Person 16 zuordnet. Im vorliegenden Fall tritt ersetzt die Recheneinheit 14 mittels des erstellten Ersatzzertifikats einen Kaufbeleg des Gegenstands 10.

Die Schrittabfolge umfasst einen weiteren Schritt 58. In dem Schritt 58 setzt die Recheneinheit 14 für den Fall, dass der Erstbetriebszeitpunkt um weniger als fünf Stunden vom Kaufzeitpunkt abweicht, den Erstbetriebszeitpunkt gleich dem Kaufzeitpunkt. Nach dem Schritt 58 führt die Recheneinheit 12 den Schritt 56 aus.

Die Schrittabfolge umfasst einen weiteren Schritt 59. Die Recheneinheit 14 führt den Verfahrensschritt 59 durch, wenn kein Kaufbeleg vorhanden ist. Die Recheneinheit 14 initiiert, dass der Kaufzeitpunkt von der Person 16 eingegeben werden kann.

Die Schrittabfolge umfasst einen weiteren Schritt 60. Die Recheneinheit 14 verifiziert den eingegebenen Kaufzeitpunkt mittels des Erstbetriebszustands. Stimmt der eingegebene Kaufzeitpunkt im Wesentlichen mit dem Erstbetriebszeitpunkt überein, führt die Recheneinheit 14 den Schritt 56 aus.

Die Schrittabfolge umfasst einen weiteren Schritt 62. Die Recheneinheit 14 führt den Schritt 62 durch, wenn der angegebene Kaufzeitpunkt wesentlich von dem Erstbetriebszeitpunkt abweicht, und zwar insbesondere um mehr als fünf Stunden. Die Recheneinheit 14 schlägt den Erstbetriebszeitpunkt als Kaufzeitpunkt vor. Die Person 16 kann den Erstbetriebszeitpunkt als Kaufzeitpunkt akzeptieren. Wird der Erstbetriebszeitpunkt als Kaufzeitpunkt akzeptiert, fährt die Recheneinheit 14 mit dem Schritt 56 fort.

Die Schrittabfolge umfasst einen weiteren Schritt 64. Die Recheneinheit 14 führt den Schritt 64 durch, wenn der Vorschlag, den Erstbetriebszeitpunkt als Kaufzeitpunkt zu übernehmen, nicht akzeptiert wird. In dem Schritt 64 gibt die Recheneinheit 14 aus, dass der Gegenstand 10 nicht registrierbar ist. Ferner kann die Recheneinheit 14 alternativ oder zusätzlich eine Verbindung mit einem Servicezentrum herstellen.

Die Schrittabfolge umfasst einen weiteren Schritt 66. Die Recheneinheit 14 führt den Schritt 66 nach dem Verfahrensschritt 58, insbesondere als Alternative zum Schritt 60, durch. In dem Schritt 66 verifiziert die Recheneinheit 14 den Kaufzeitpunkt anhand des Produktionsparameters, insbesondere der Seriennummer. Beispielsweise erkennt die Recheneinheit 14 einen Fehler, wenn die Seriennummer beispielsweise zu dem angegebenen Kaufzeitpunkt noch nicht vergeben wurde. Die Recheneinheit 14 fährt mit dem Schritt 64 fort.

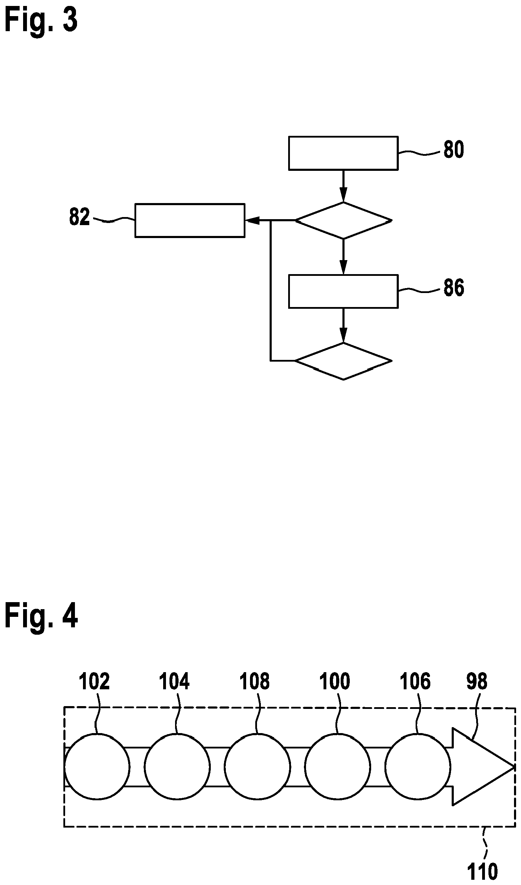

In Figur 3 sind weitere Schritte der Schrittabfolge gezeigt.

Die Schrittabfolge umfasst einen weiteren Schritt 80. Die Recheneinheit 14 registriert in dem Schritt 80 den Gegenstand 10 in einem Gegenstandsbestand. Die Kommunikationseinheit 20 verbindet den Gegenstand 10 mit der externen Einheit 22. Die in der Speichereinheit 18 hinterlegten Parameter, insbesondere der Nutzungsparameter, der Vertriebsparameter, der weitere Vertriebsparameter, der Produktionsparameter und/oder der weitere Produktionsparameter werden von der Recheneinheit 14 ausgelesen. Ferner ordnet die Recheneinheit 14 den Gegenstand 10 in Abhängigkeit von zumindest einem Identifikationsparameter der Person 16 der Person 16 zu. Die Recheneinheit 14 gleicht ab, ob für den Gegenstand 10 bereits ein Hauptnutzer hinterlegt ist.

Die Schrittabfolge umfasst einen weiteren Schritt 82. Für den Fall, dass bereits ein Hauptnutzer hinterlegt ist, führt die Recheneinheit den Schritt 82 aus. In dem Schritt 82 fragt die Recheneinheit 14 ab, ob bereits ein zentraler Ansprechpartner für eine Verwaltung, Instandhaltung, Wartung und/oder Reparatur hinterlegt ist. Für den Fall, dass noch kein Ansprechpartner hinterlegt ist, hinterlegt die Recheneinheit 14 die zugeordnete Person 16 als Ansprechpartner.

Die Schrittabfolge umfasst einen weiteren Schritt 86. Für den Fall, dass es einen Hauptnutzer gibt, hinterlegt die Recheneinheit 14 in dem Schritt 86 den Hauptnutzer als Ansprechpartner. Beispielsweise kann die Recheneinheit 14 eine wiederholte Zuordnung einer Person 16 erkennen und die Person 16 so als Hauptnutzer hinterlegen. Dazu initiiert die Recheneinheit 14 bei einer wiederholten Zuordnung mittels des gleichen Identifikationsparameters wenigstens eine Zuteilung von Nutzungsrechten für die Person 16.

Wie beispielhaft in den Figuren 2 und 3 dargestellt, fasst die Recheneinheit 14 verschiedene Parameter zu einem Zertifikat zusammen. In Figur 4 ist ein zeitlicher Verlauf einer Erstellung verschiedener Zertifikate über eine Lebenszeit 98 des Gegenstands dargestellt. Im Folgenden ist die Erstellung des Zertifikats aus Figur 2 im Verlauf einer Lebenszeit des Gegenstands 10 beispielhaft erläutert. Ferner wird im Folgenden anhand weiterer Beispiele die Erstellung weiterer Zertifikate erläutert.

Im vorliegenden Fall ist das Zertifikat 100 als ein Erstbetriebszertifikat ausgebildet. Die Recheneinheit 14 erstellt das Zertifikat 100 zumindest anhand des Nutzungsparameters. Der Nutzungsparameter ist ein Nutzungszeitpunkt. Ferner erstellt die Recheneinheit 14 das Zertifikat 100 zumindest anhand des weiteren Nutzungsparameters. Der weitere Nutzungsparameter ist eine Nutzungsdauer. Anhand des Nutzungsparameters und des weiteren Nutzungsparameters bestimmt die Recheneinheit 14 den Erstbetriebszeitpunkt. Der Erstbetriebszeitpunkt ist ein Nutzungszeitpunkt, an welchem eine Nutzungsdauer einen vorgegebenen Nutzungsdauergrenzwert überschreitet. Alternativ kann die Recheneinheit 14 den Erstbetriebszeitpunkt anhand einer Nutzungsroutine, wie beispielsweise einer Tastenkombination, ermitteln.

Alternativ oder zusätzlich kann die Recheneinheit 14 zumindest ein erstes weiteres Zertifikat 102 erstellen. Im vorliegenden Fall erstellt die Recheneinheit 14 zumindest ein erstes weiteres Zertifikat 102. Das erste weitere Zertifikat 102 ist als ein Produktionszertifikat ausgebildet. Die Recheneinheit 14 erstellt das erste weitere Zertifikat 102 zumindest anhand eines Geräteparameters. Der Geräteparameter ist ein Produktionsparameter, und zwar insbesondere ein Produktionszeitpunkt, wie beispielsweise ein Datum und/oder eine Uhrzeit, an/zu welchem/welcher der Gegenstand produziert und insbesondere fertiggestellt ist. Ferner erstellt die Recheneinheit 14 das erste weitere Zertifikat 102 aus zumindest einem weiteren Gegenstandsparameter. Der weitere Gegenstandsparameter ist im vorliegenden Fall ein Produktionsparameter, und zwar insbesondere eine Seriennummer und/oder eine Bare Tool Number des Gegenstands.

Alternativ oder zusätzlich kann die Recheneinheit 14 zumindest ein zweites weiteres Zertifikat 104 erstellen. Im vorliegenden Fall erstellt die Recheneinheit 14 ein zweites weiteres Zertifikat 104. Das zweite weitere Zertifikat 104 ist als ein Testzertifikat ausgebildet. Die Recheneinheit erstellt das zweite weitere Zertifikat 104 zumindest anhand eines ersten weiteren Nutzungsparameters. Der erste weitere Nutzungsparameter ist eine Nutzungsintensität, wie beispielsweise eine maximale Drehzahl. Ferner erstellt die Recheneinheit 14 das zweite weitere Zertifikat 104 zumindest anhand eines zweiten weiteren Nutzungsparameters. Der zweite weitere Nutzungsparameter ist ein Testzeitpunkt, wie beispielsweise ein Datum und/oder eine Uhrzeit, an/zu welchem/welcher ein Test durchgeführt ist und insbesondere an/zu welchem/welcher die Erfassungseinheit 14 den zweiten weiteren Nutzungsparameter erfasst.

Alternativ oder zusätzlich kann die Recheneinheit 14 zumindest ein drittes weiteres Zertifikat 106 erstellen. Im vorliegenden Fall erstellt die Recheneinheit 14 ein drittes weiteres Zertifikat 106. Das dritte weitere Zertifikat 106 ist als ein Instandhaltungszertifikat ausgebildet. Die Recheneinheit 14 erstellt das dritte weitere Zertifikat 106 zumindest anhand eines ersten weiteren Gegenstandsparameters, insbesondere eines Instandhaltungsparameters. Der erste weitere Gegenstandsparameter ist ein Instandhaltungszeitpunkt. Ferner erstellt die Recheneinheit das dritte weitere Zertifikat 106 anhand eines zweiten weiteren Gegenstandsparameters, insbesondere eines Instandhaltungsparameters, und zwar insbesondere anhand einer Angabe einer instand zu haltenden Komponente des Gegenstands 10. Denkbar ist, dass die Recheneinheit das dritte weitere Zertifikat 106 und das zweite weitere Zertifikat 104 zusammenfasst zu einem Hauptzertifikat, wie beispielsweise einem Betriebszertifikat.

Alternativ oder zusätzlich kann die Recheneinheit 14 zumindest ein viertes weiteres Zertifikat 108 erstellen. Im vorliegenden Fall erstellt die Recheneinheit 14 ein viertes weiteres Zertifikat 108. Das vierte weitere Zertifikat 108 ist als ein Vertriebszertifikat ausgebildet. Die Recheneinheit 14 erstellt das vierte weitere Zertifikat 108 zumindest anhand eines dritten weiteren Gegenstandsparameters. Der dritte weitere Gegenstandsparameter ist ein Vertriebsparameter, wie insbesondere eine Käuferinformation. Ferner erstellt die Recheneinheit 14 das vierte weitere Zertifikat 108 anhand eines vierten weiteren Gegenstandsparameters, insbesondere eines Instandhaltungsparameters, und zwar insbesondere anhand eines Kaufzeitpunkts des Gegenstands 10.

Es ist denkbar, dass die Recheneinheit 14 mehrere, insbesondere alle Zertifikate zu einem Hauptzertifikat 110, wie beispielsweise einem insbesondere zeitlichen Verlaufs- und/oder Lebenszeitzertifikat, zusammenfasst. Das Hauptzertifikat 110 kann alle in einem zeitlichen Verlauf des Gegenstands erstellten Zertifikate, vorzugsweise im Laufe einer Lebenszeit des Gegenstands, umfassen.

## Patentansprüche

1. Vorrichtung zu einer Generierung zumindest einer Kennung wenigstens eines Gegenstands (10), insbesondere einer Werkzeugmaschine, mit zumindest einer Erfassungseinheit (12), welche zumindest einen Nutzungsparameter und/oder zumindest einen Gegenstandsparameter des Gegenstands (10) erfasst, **gekennzeichnet durch** zumindest eine Recheneinheit (14), welche in Abhängigkeit von dem zumindest einen erfassten Nutzungsparameter und/oder dem zumindest einen erfassten Gegenstandsparameter ein Zertifikat des Gegenstands (10) erstellt.

2. Vorrichtung nach Anspruch 1, **dadurch gekennzeichnet, dass** die Recheneinheit (14) zumindest anhand des zumindest einen Nutzungsparameters wenigstens ein Erstbetriebszeitpunkt des Gegenstands (10) ermittelt und abhängig von diesem das Zertifikat erstellt.

3. Vorrichtung nach Anspruch 2, **dadurch gekennzeichnet, dass** die Recheneinheit (14) anhand zumindest eines in einer Speichereinheit (18), insbesondere in einer internen Speichereinheit des Gegenstands (10), hinterlegten Vertriebsparameters den ermittelten Erstbetriebszeitpunkt verifiziert.

4. Vorrichtung nach Anspruch 2 oder 3, **dadurch gekennzeichnet, dass** die Recheneinheit (14) anhand des zumindest einen Vertriebsparameters und des ermittelten Erstbetriebszeitpunkts ein Alter des Gegenstands (10) berechnet und abhängig von diesem das Zertifikat erstellt.

5. Vorrichtung nach einem der vorhergehenden Ansprüche, **dadurch gekennzeichnet, dass** die Recheneinheit (14) zumindest anhand des zumindest einen Nutzungsparameters und/oder des zumindest einen Gegenstandsparameters zumindest eine Anwendung des Gegenstands (10) ermittelt und abhängig von diesem das Zertifikat erstellt.

6. Vorrichtung nach einem der vorhergehenden Ansprüche, **dadurch gekennzeichnet, dass** die Erfassungseinheit (12) innerhalb zumindest eines Zeitintervalls Nutzungsparameter und/oder Gegenstandsparameter erfasst, und die Recheneinheit (14) diese verarbeitet, um das erstellte Zertifikat anzupassen.

7. Vorrichtung nach einem der vorhergehenden Ansprüche, **dadurch gekennzeichnet, dass** die Erfassungseinheit (12) zur Erstellung des Zertifikats zumindest einen zumindest als ein Nutzungszeitpunkt, eine Nutzungsdauer, eine Nutzungsanzahl, ein Nutzungsstandort, eine Nutzungsintensität und/oder ein Nutzungszustand des Gegenstands (10) ausgebildeten Nutzungsparameter erfasst.

8. Vorrichtung nach einem der vorhergehenden Ansprüche, **gekennzeichnet durch** zumindest eine, insbesondere kabellose, Kommunikationseinheit (20), welche zu einer Erstellung des zumindest einen Zertifikats den zumindest eine Nutzungsparameter und/oder den zumindest einen Gegenstandsparameter an zumindest eine externe Einheit (22), überträgt.

9. Vorrichtung nach einem der vorhergehenden Ansprüche, **gekennzeichnet durch** zumindest eine, insbesondere kabellose, Kommunikationseinheit (20), welche das zumindest eine erstellte Zertifikat an zumindest eine externe Einheit (22) überträgt.

10. Werkzeugmaschine mit zumindest einer Vorrichtung nach einem der vorhergehenden Ansprüche.
